# EUROPEAN PATENT APPLICATION

(11) **EP 2 963 638 A1**
(43) Date of publication of application: **06.01.2016**
(21) Application number: 15171759.2
(22) Date of filing: 12.06.2015
(51) Int. Cl.: G09G 3/34

(54) **DISPLAY DRIVING APPARATUS AND ELECTRONIC DEVICE INCLUDING THE SAME**

(30) Priority: 04.07.2014 KR 20140083484; 21.01.2015 KR 20150010116
(71) Applicant: Samsung Electro-Mechanics Co., Ltd., Gyeonggi-do (KR)
(72) Inventor: Park, Deuk Hee, Gyeonggi-do (KR); Ryu, Jong Gi, Seoul (KR); Lee, Jong Woo, Seoul (KR); Lee, Jae Shin, Gyeonggi-do (KR); Cho, Koon Shik, Seoul (KR); Lee, Tae Ha, Gyeonggi-do (KR)
(74) Representative: Grünecker Patent- und Rechtsanwälte PartG mbB

(57) **Abstract**

Provided are a display driving apparatus for updating information displayed on a display of an electronic device, an electronic device including the same, and a method for driving the display using the same. A display driving apparatus includes a driving controller configured to receive promotion setting information from a device controller of an electronic device and drive the display according to the received promotion setting information independently of the device controller.

## Description

### CROSS-REFERENCE TO RELATED APPLICATIONS

This application claims the benefit under 35 USC 119(a) of Korean Patent Application Nos. 10-2014-0083484, filed on July 4, 2014, and 10-2015-0010116, filed on January 21, 2015, in the Korean Intellectual Property Office, the entire disclosures of which are incorporated herein by reference for all purposes.

### BACKGROUND

### 1. Field

The following description relates to a driving apparatus for driving a display of an electronic device, an electronic device including the same, and a method of driving the display of the electronic device.

### 2. Description of Related Art

Conventional labels are produced from a piece of paper, a metal plate, or a polymer sheet and affixed to a product, container, shelf or the like. These labels must be replaced when product prices change. However, labels may be also affixed by displaying product information electronically.

In order to draw people's attention, static information of an electronic label may be displayed on an electronic display while other information may be dynamically updated on the remaining region of the electronic display. An electronic information label (EIL) that is adhered to a shelf in a store, displaying product-relevant information, is known as one of methods to achieve this purpose. Electronic labels communicate with a management server through a relay. A set of electronic labels that are managed by the same relay may be considered together as forming a group, and all of electronic labels managed by one server may be divided into a plurality of groups based on which relay is being used for each electronic label. For efficiency, product-relevant information for electronic labels in each group may be updated together.

Electronic labels are often battery-powered. To reduce power consumption of electronic labels, the electronic labels remain in sleep mode until they wake up for information update. The period during which the electronic labels are awake for information update is referred to as the "wake-up period." During the wake-up period, electronic labels listen to communications from a management server, and receive data from the management server, and store the received data. The data includes product information.

Some electronic labels provide a promotion feature to draw customers' attention to certain displayed information. For example, an electronic label may blink the text "Sale" to notify customers that a product is on discount. In another example, a bezel area of the electronic label may blink with a red color so that it stands out from other electronic labels. To maintain the promotion feature, information to be displayed needs to be frequently changed. Accordingly, the electronic label continuously enters the wake-up period in order to receive the information to blink, which may result in an increased power consumption and a reduced battery lifetime.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a display driving apparatus for updating information displayed on a display of an electronic device includes a driving controller configured to receive promotion setting information from a device controller of the electronic device and drive the display according to the received promotion setting information independently of the device controller.

The display may be an electronic paper display.

The general aspect of the display driving apparatus may further include a configuration register, a sequence generator, and a mode setter configured to store the received promotion setting information in the configuration register and to set the sequence generator, and the driving controller may include a dynamic driving controller configured to be periodically activated based on a sequence generated by the sequence generator, update the display to display the promotion information according to the promotion setting information stored in the configuration register and enter into a sleep mode.

The promotion setting information may include selection information for a dynamic display region, and the dynamic driving controller may be configured to control the promotion information to be displayed on a region selected according to the selection information.

The promotion setting information may include first promotion information and second promotion information, and the dynamic driving controller may alternately display the first promotion information and the second promotion information.

The general aspect of the display driving apparatus may further include a power supply configured to provide a driving power, and a dynamic driver configured to be controlled by the dynamic driving controller and to drive a dynamic segment of the display using the driving power provided by the power supply.

The display driving apparatus may include a plurality of dynamic segments and a plurality of dynamic drivers, and each dynamic driving controller may control a dynamic driver to perform blinking operation in response to the dynamic driver corresponding to a segment designated by the configuration register.

The dynamic driver may include a first switch and a second switch that are connected in serial such that a connection node thereof is connected to one dynamic segment.

The dynamic driver may further include a third switch connected to the connection node of the first and second switches.

The power supply may apply a first voltage to a source of the first switch and apply a second voltage with a different polarity than the first voltage to a source of the fifth switch.

The power supply may apply a first voltage to a source of the first switch and apply a second voltage that is lower than the first voltage to a source of the fifth switch.

The driving controller may further include a general driving controller configured to drive the display to display general information according to setting information received from the mode setter and then enter into sleep mode.

The general aspect of the display driving apparatus may further include a general driver configured to be controlled by the general driving controller and drive a general segment of the display using a driving power provided from the power supply.

The general driver may include a fourth switch and a fifth switch that are connected in serial such that a connection node thereof is connected to one general segment.

In another general aspect, an electronic device includes a display, a device controller configured to control operation of the electronic device and enter into sleep mode after outputting setting information, and a display driver configured to drive the display independently of the device controller to display promotion information on at least a part of the display according to the setting information received from the device controller.

The display may be an electronic paper display.

The display driver may include a configuration register, a sequence generator, a mode setter configured to store the received promotion setting information in the configuration register and to set the sequence generator, and a driving controller comprising a dynamic driving controller configured to be periodically activated based on a sequence generated by the sequence generator and to drive the display to display the promotion information according to the promotion setting information stored in the configuration register in response to being activated and enter into sleep mode.

The promotion setting information may include selection information for a dynamic display region, and the dynamic driving controller may be configured to control the promotion information to be displayed on a region selected according to the selection information.

The promotion setting information may include first promotion information and second promotion information, and the dynamic driving controller may be configured to alternately display the first promotion information and the second promotion information.

The display may be a segment display that has a dynamic segment on at least a part of the display, and the electronic device may further include a display driving apparatus including a power supply to provide a driving power and a dynamic driver configured to be controlled by the driving controller and to drive the dynamic segment on the display using the driving power provided by the power supply.

A plurality of dynamic segments and a plurality of dynamic drivers may be provided in the electronic device, and each dynamic driving controller may be configured to control a dynamic driver to perform blinking operation in response to the dynamic driver corresponding to a segment designated by the configuration register.

The dynamic driver may include a first switch and a second switch that are connected in serial such that a connection node thereof is connected to one dynamic segment.

The dynamic driver may further include a fifth switch connected to the connection node of the first and second switches.

The power supply may be configured to apply a first voltage to a source of the first switch and to apply a second voltage with a different polarity than the first voltage to a source of the fifth switch.

The power supply may be configured to apply a first voltage to a source of the first switch and to apply a second voltage that is lower than the first voltage to a source of the fifth switch.

The driving controller may further include a general driving controller configured to drive the display to display general information according to setting information received from the mode setter and then enter into sleep mode.

A region for displaying the general information may be a graphic-type electronic paper display, and the general driving controller may be configured to control graphic driving of a region for displaying the general information.

The display driving apparatus may further include a general driver configured to be controlled by the general driving controller and to drive a general segment of the display using a driving power provided from the power supply.

The general driver may include a fourth switch and a fifth switch that are connected in serial such that a connection node thereof is connected to one general segment.

In another general aspect, a display driving apparatus for driving a display having a first display region and a second display region includes a sequence generator configured to generate a sequence based on dynamic setting information obtained from a device controller, and a first driving controller configured to be periodically activated to update the first display region and enter into sleep mode after updating based on the generated sequence, in which the first driving controller is activated independent of activation status of a second driving controller that updates the second display region.

The general aspect of the display driving apparatus may include the second driving controller configured to update the second display region and enter into sleep mode after updating based on general setting information obtained from the device controller, and the first display region may include one or more dynamic segments for displaying promotion information, and the second display region may include general segments for displaying product information.

The general aspect of the display driving apparatus may further include a configuration register including a memory to store the dynamic setting information, and a mode setter configured to receive display data from the device controller and store the dynamic display information obtained from the display data in the configuration register. The first driving controller may be configured to drive the first display region based on the dynamic setting information stored in the configuration register independent of activation status of the device controller.

In another general aspect, a method of driving a display having a first display region and a second display region involves: receiving at a display driver display data from a device controller, generating a sequence based on dynamic setting information included in the received display data, and periodically activating a first driving controller to update content displayed in the second display region and deactivating the first driving controller after the updating based on the sequence, in which the first driving controller is periodically activated independent of activation status of a second driving controller for driving the first display region.

The general aspect of the method may further involve, in response to the received display data including product information, updating general setting information stored in a memory, and activating the second driving controller to update the second display region based on the general setting information and deactivating the second driving controller after the updating. The first display region may be a dynamic display region for displaying promotion information, and the second display region may be a general display region for displaying the product information.

In yet another general aspect, a non-transitory computer readable medium stores therein instructions that causes an electronic device to perform the general aspect of the method described above.

Other features and aspects will be apparent from the following detailed description, the drawings, and the claims.

### BRIEF DESCRIPTION OF THE DRAWINGS

FIG. 1 is a diagram illustrating an example of an electronic information label (EIL) according to the present disclosure.
FIG. 2 is a block diagram illustrating an example of an electronic device.
FIG. 3 is a block diagram illustrating an example of a display driving apparatus.
FIG. 4 is a diagram illustrating an example of a dynamic driver.
FIG. 5 is a diagram illustrating an example of a configuration of a general driver.
FIG. 6 is a graph showing driving signals of a general segment and a dynamic segment according to one example of the present disclosure.
FIG. 7 is a graph showing driving signals of a general segment and a dynamic segment according to another example of the present disclosure.
FIG. 8 is a block diagram illustrating an example of a display driving apparatus according to the present disclosure.
FIG. 9 is a flowchart illustrating an example of a method for controlling an EPD.
FIG. 10 is a graph showing control signals for driving the EPD and waveforms of the control signals according to one example of the present disclosure.
FIG. 11 is a diagram illustrating an example of an electronic device.
FIG. 12 is a flowchart illustrating an example of a method of displaying information on an electronic device.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

The following description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

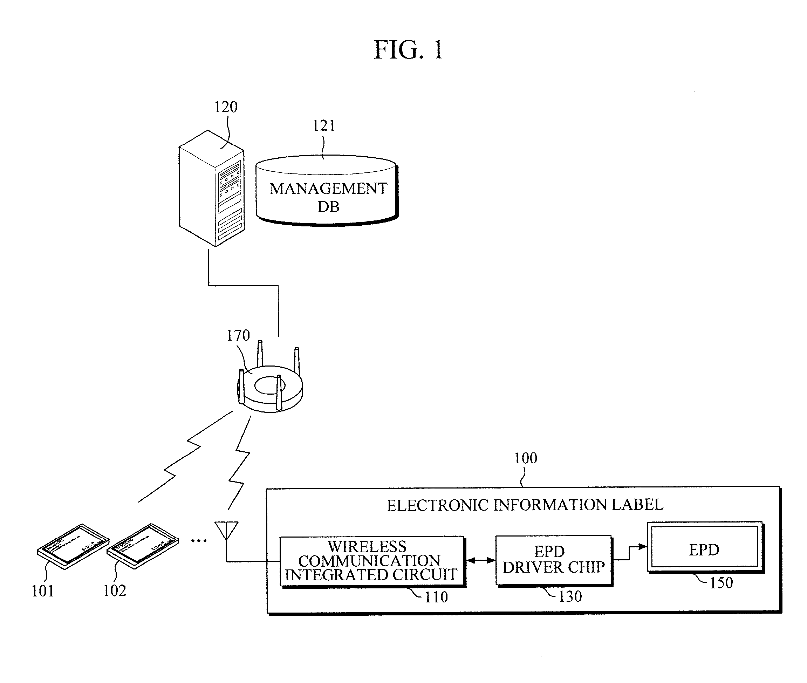

FIG. 1 illustrates an example of an electronic information label (EIL) system according to the present disclosure. The illustrated system relates to an EIL, but the aspects of the present disclosure are not limited thereto. For example, aspects of the system may be applied to other electronic devices that dynamically display information and are operated at low power such as, i.e., by batteries.

Referring to FIG. 1, the illustrated example of the EIL system includes a central server 120, a gateway 170, and an electronic information labels (EILs) 100, 101, and 102. The central server 120, namely, a management server, is connected to the gateway 170 via a cable. The gateway 170 and EILs 100 of a group belonging to said gateway 170 communicate under a protocol, for example, defined on PHY/MAC layer in accordance with IEEE 802.15.4 standard.

The EILs are classified into a plurality of groups, and product information is updated for each group. To reduce power consumption of EILs that are supplied from batteries, the EILs stand by in sleep mode until they wake up. A display uses an electronic paper display (EPD) screen that continuously displays information even without power being supplied thereto.

The EPD is employed as an electronic information label due to its bistability that enables an image on a display screen to be retained even when power supply has been disconnected. Examples of electronic paper display includes a twist ball-type EPD that uses an electrostatic charge hemispherical twist ball, an electrophoretic display that applies electrophoresis and microcapsules, and cholesteric liquid crystal display that uses cholesteric liquid crystal; however, various other types of electronic paper display are known and within the scope of the present disclosure.

In one example, the EIL 100 includes a wireless communication integrated circuit (IC) 110, an EPD driver chip, and an EPD 150.

In this example, although not illustrated, the EIL 100 is powered by a battery. The wireless communication IC 110 is a system-on-chip (SoC) integrated circuit on which a ZigBee transceiver, a microprocessor, a memory, an analog-to-digital converter, a digital-to-analog converter, and a peripheral device input/output interface, e.g., a serial peripheral interface (SPI), are disposed. However, the aspects of the present disclosure are not limited thereto; in another example, the IC 110 may be configured by applying various design schemes, such as designated hardware, gate array, and an individual semiconductor device, to hardware.

The ZigBee transceiver communicates with the gateway 170 via ZigBee. ZigBee communication is one of communication methods that define PHY/MAC according to IEEE 802.15.4 standard, and is a short-range low-speed communication specification with excellent security and low power consumption. However, the aspects of the disclosure presented herein are not limited thereto. For instance, in another example, various short-range communication methods, such as Bluetooth or a communication method employing only a part of ZigBee specifications, may be used. In this example, the low power consumption memory may be implemented with a flash memory that retains data without the power supplied from a battery. However, the aspects of the present disclosure are not limited thereto, and any appropriate memory among well-known semiconductor memories may be used in another examples.

The wireless communication IC 110 controls the overall operation of the EIL, and enters into sleep mode after outputting setting information. The EPD driver chip 130 drives the EPD 150 independently of the wireless communication IC 110 according to promotion setting information received from the wireless communication IC 100 in order to display promotion information on at least a part of the EPD 150. In the illustrated example, the display 150 is implemented as an EPD; however, the aspects of the present disclosure are not limited thereto. For example, the display 150 may be a liquid crystal display (LCD) or organic light emitting diode (OLED) that consumes low power while providing dynamic display.

For the EIL to display the promotion information by, for example, blocking a bezel area, the wireless communication IC 110 regularly wakes up to control the EPD driver chip 130 to block a bezel. To implement a promotion feature, the wireless communication IC 110 needs to output settings and display data values of a configuration register required for displaying to the EPD driver chip. In an example in which a ZigBee SoC is used as the wireless communication IC, the current consumption of 20 mA or more may be used for driving the ZigBee SoC. As the same amount of current is consumed for changing the image on the full screen or only some segments of the display screen, a large amount of current is consumed for even simple change of an image on the screen.

According to the above control method for dynamic displaying a promotion feature, the wireless communication IC needs to be activated to control the EPD driver chip each time an image displayed is changed, which results in excessive power consumption.

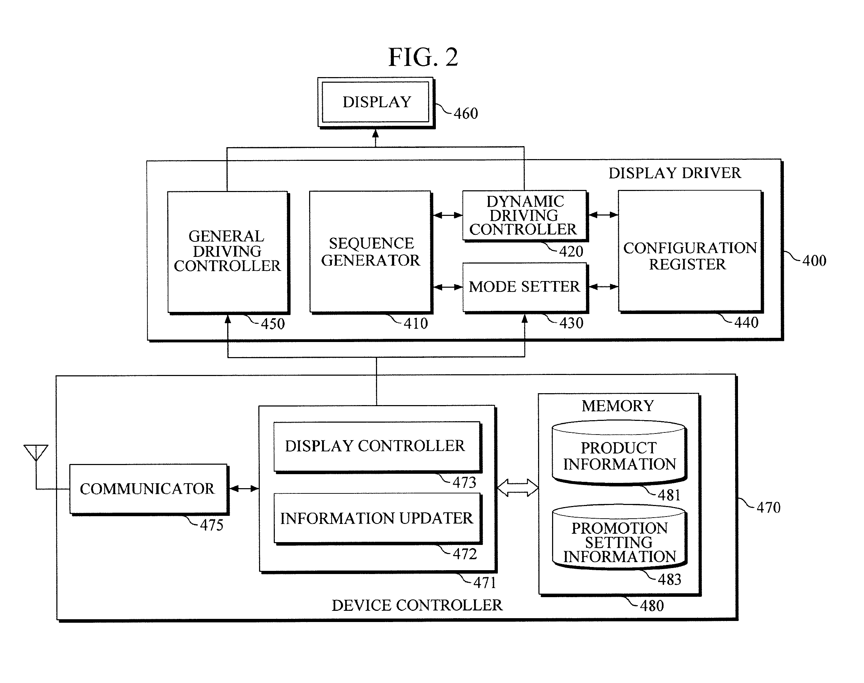

FIG. 2 is a block diagram illustrating an electronic device according to an example of the present disclosure. In this example, the electronic device is an electronic information label (EIL).

Referring to FIG. 2, the electronic device includes a display 460, a device controller 470, and a display driver 400. In this example, the display 460 is a segment-type EPD. However, the type of the display according to the present disclosure is not limited to a segment type EPD; rather, in another example, the display may be a thin-film-transistor (TFT)-driven EPD, namely, graphic or image type EPD, a segment-type LCD, a graphical LCD, an OLED, or a combination thereof. The segment type display is a display device that has segment electrodes and a common electrode interposed between the segment electrodes, wherein a display layer between the common electrode and the segment electrodes reacts to a voltage applied to the common electrode and segment electrodes to modulate light. According to one example, the display 460 may consist of a display area and a border bezel area, wherein the display area is an image-type EPD and the border bezel area is a single-segment EPD. In another example, the display 460 may consist of a display area and a border bezel area, and the display area may be an image-type EPD and the border bezel area may be a single-segment LCD.

In this example, a communicator 475 communicates with a relay. The communicator 475 may be a short-range communicator that communicates with a relay via ZigBee. ZigBee communication refers to one of communication methods that define PHY/MAC according to IEEE 802.15.4 standard. ZigBee is a short-range low-speed communication method that provides excellent security and low power consumption. However, the aspects of the disclosure presented herein are not limited thereto; various other short-range communication methods, such as Bluetooth, may be used by the communicator 475.

The memory 480 with a low power consumption required is a flash memory that retains data without the power supplied from a battery. However, the aspects of the present disclosure are not limited thereto, such that any appropriate memory among well-known semiconductor memories may be used.

The device controller 470 controls the overall operation of the EIL, and enters into sleep mode after outputting setting information to the display driver 400. In this example, the device controller 470 is a ZigBee SoC IC that has embedded therein all of a microprocessor 471, the communicator 475, the memory 480, and an interface circuit (not shown) that interfaces with the display 460. However, the aspects of the present disclosure are not limited thereto; in another example, the device controller may be configured by chips of multiples packages or by applying various design methods, such as designated hardware, gate array, and an individual semiconductor device, to hardware. The device controller 470 may execute programs stored in the memory 480, e.g., a system operating program or applications. A display controller 473 and an information updater 472 may be implemented by applications. However, it may be apparent in view of current design technologies that such elements may be implemented as hardware only or the combination of software and hardware.

In one general aspect, the device controller 470 listens to communication from a management server through the communicator 475 during the wakeup period, and if there is data to be received, receives the data and stores it in the memory 480 as product information 481. In another aspect, the data received by the device controller 470 may contain promotion information 483. The promotion information may be input by an external input/output interface that can be provided to the EIL, for example, an additional NFC communication tag, other than the communicator 475.

The display driver 400 drives the display 460 independently of the device controller 470 according to promotion setting information that is received from the device controller 470 in order to display the promotion information on at least a portion of the display 460. In this example, the electronic device may be a tag that displays only the promotion information. The display 460 may consist of segments that display dynamic information. The display driver 400 drives the display 460 independently of the device controller 470. For example, even after the device controller 470 enters into sleep mode, the display driver 400 may blink the segments of the display 460 using a timer embedded therein.

The setting information may be promotion setting information sent from the device controller 470. An interface between the device controller 470 and the display driver 400 may be one of interfaces, for example, a serial peripheral interface (SPI), 12C bus, and so on, between a peripheral device and a microprocessor.

The promotion setting information may be simply information for activating a promotion feature. For example, in the event that a promotion feature to be activated is a feature to blink fixed segments at a specified rate, information to immediately initiate the promotion feature may suffice as the information for activating the promotion feature. In another example, the promotion setting information may include a blinking rate. In this case, a segment area designated beforehand may be controlled to blink at particular rate. According to another example, the promotion setting information may be information that specifies a dynamic display region, for example, identification information of segment terminal or display region information of graphic display. In this case, a fixed dynamic display pattern determined beforehand may be applied to said display region. In another example, the setting information may include information about selection of a display region to be dynamically operated and cyclic information for dynamic display. In this case, the display area and an interval for dynamic display of the promotion information may be set freely.

In this example, the information updater 472 stores product information, which has been received via the communicator 475, in the memory 480 as product information data 481. The product information may include an image file that shows information to be displayed on the display 460 such as, for example, a product price, a monetary unit, a discount rate, or availability of special offer/discount, and may further include information regarding display control for the product information. When product information is to be updated, the display controller 473 controls the display driver 400 to update the information displayed on the display 460. The display controller 473 may display the updated information and then control the display driver 400 to cut off a driving signal to a static display region of the display 460. The EPD keeps displaying the information even when the driving signal is stopped.

In another example, the display driver 400 may include a configuration register 440, a sequence generator 410, a mode setter 430, and a dynamic driving controller 420. In one example, the display driver 400 is embodied as a specialized semiconductor chip in a single-package. The semiconductor chip includes a sequence generator, a memory, a microprocessor, and an input/output interface circuit. In this example, the dynamic driving controller 420 and the mode setter 430 may be embodied as software only. In another example, the dynamic driving controller 420 and the mode setter 430 may be embodied as specialized logic circuits instead of microprocessors.

The configuration register 440 illustrated in FIG. 2 may be embodied as a flash memory. If the display is of a segment type display, the promotion setting information stored in the configuration register 440 may include selection information for a segment that displays the promotion information and information about a cycle for which said promotion information is displayed. In another example, the display may be a graphic type display, and the promotion setting information stored in the configuration register 440 may include image information to be displayed as the promotion information, information about a region on which said promotion information is to be displayed, and information about a duration for which the image information is displayed. In yet another example, the promotion setting information stored in the configuration register 440 may include pieces of image information to be alternately displayed as the promotion information, information about a region on which the image information is displayed, and information about a cycle for which each image information is alternately displayed. In this case, first promotion information and second promotion information may be alternately displayed on the same display region. In the above described embodiments, the cyclic information may be omitted and the information may blink or be alternately displayed at a rate determined by a program.

The sequence generator 410 generates system sequences to wake up the dynamic driving controller 420. In one embodiment, the sequence generator 410 may be a timer. In another embodiment, the sequence generator 410 may be a plurality of timers. The timer includes a register to set a cycle, and outputs a pulse at each cycle. The mode setter 430 stores the promotion setting information received from the device controller 470 in the configuration register 440 and sets the sequence generator 410 according to the promotion setting information.

The dynamic driving controller 420 is periodically activated according to the sequence generated by the sequence generator 410 to drive the display 460 to display the promotion information in accordance with the promotion setting information stored in the configuration register 440, and then enters into sleep mode. Once a timer event occurs in the sequence generator 410, a hardware interrupt takes place in the microprocessor, and then the displaying of the promotion information by the dynamic driving controller 420 is initiated. When the displaying of the promotion information is completed, the microprocessor returns to sleep mode.

A sequence cycle of the sequence generator 410 corresponds to a cycle for displaying the promotion information. For example, the sequence cycle of the sequence generator 410 corresponds to a blinking cycle, i.e., a time period extending from the moment the light turns on in a display, turns off, and then to the moment of the light turns back on. In another example, in the case of alternately displaying pieces of promotion information that blinks, the sequence cycle of the sequence generator 410 may be one cycle for which each piece of promotion information is displayed. That is, each time a sequence is generated, the dynamic driving controller 420 wakes up, wherein the dynamic driving controller 420 may control to display the first promotion information during a first wakeup period and then display the second promotion information during a second wakeup period. Furthermore, the pieces of promotion information may be sequentially or randomly, and repeatedly, displayed.

In another aspect, the display driver 400 may further include a general driving controller 450 that drives the display 460 to display generic information according to setting information received from the mode setter 430, and then enters into sleep mode. The general driving controller 450 controls the display of information on a region of the display 460 on which to display static information. When the device controller 470 wakes up from sleep mode in response to an internal timer and receives the product information from the gateway, the device controller 470 stores the received information in the internal memory 480, and at the same time controls the driving controller 450 and the configuration register 440 to update the product information on a general display region of the display 460.

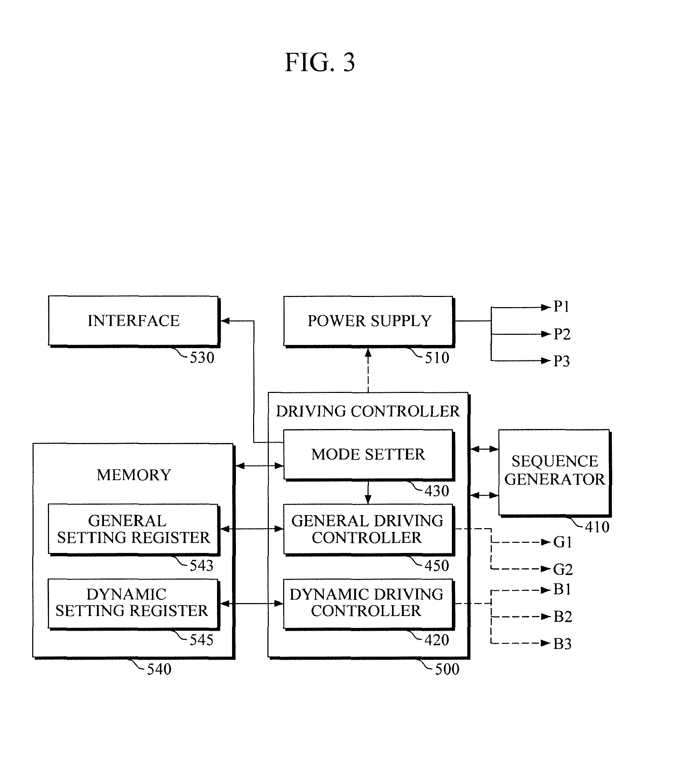

The display controller 473 directly control the displaying procedures by enabling each functional block or setting parameters of the general driving controller 450 in a similar way as described above with reference to FIGS. 2 and 3. However, the aspects of the present disclosure are not limited thereto, such that the display controller 473 may be configured to store only the product information to be updated in the configuration register 440 and trigger the general driving controller 450 to update said product information and for the subsequent display update procedures, the general driving controller 450 may be configured to control said update procedures according to the internal sequence generator, in a similar manner to the dynamic driving controller 420.

In this example, the general driving controller 450, the dynamic driving controller 420 and/or the mode setter 430 may be embodied as software running on a processor. However, in another example, the general driving controller 450, the dynamic driving controller 420 and/or the mode setter 430 may be embodied as a specialized logic circuit.

FIG. 3 illustrates an example of a display driving apparatus according to the present disclosure. The display driving apparatus of FIG. 3 is similar to the display driver 400 of FIG. 2.

Referring to FIG. 3, the display driving apparatus includes a driving controller 500, a memory 540 and a sequence generator 410. The display driving apparatus receives display data from a device controller of an electronic device, and updates what is shown on a display. According to one example, the display driving apparatus drives the display independently of a device controller according to promotion setting information received from the device controller such that the display displays the promotion information.

In this example, the display 460 may be a segment-type EPD. However, the type of the display 460 is not limited to a segment-type EPD; in another example, the display 460 may be a TFT-driven EPD, namely, graphic or image type EPD, a segment-type LCD, a graphical LCD, an OLED, or the combination thereof.

According to one example, the display driving apparatus may be a display driver chip appropriate for driving a tag that displays only promotion information. In this example, the display 460 of the display driving apparatus may consist of segments, displaying dynamic information. The display driving apparatus drives the display 460 independently of the device controller 470. For example, even after the device controller enters into sleep mode, the display driving apparatus may blink the segments of the display 460 using a timer embedded therein.

An interface 530 that interfaces between the device controller and the display driving apparatus may be used. Examples of interfaces that may be used to implement the interface 530 include an SPI, I2C bus, and so on, that provides an interface between a peripheral device and a microprocessor.

The promotion setting information may be simply information for activating a promotion feature. For example, if a promotion feature is to blink fixed segments at a specified rate, information that immediately initiates the promotion feature will be sufficient. In another example, the promotion setting information may include a blinking rate. In this example, a segment area designated beforehand may be controlled to blink at particular rate. In another example, the promotion setting information may be information that specifies a dynamic display region, for example, identification information of segment terminal or display region information of graphic display. In this case, a fixed dynamic display pattern determined beforehand may apply to said display region. In another example, the setting information may include information about selection of a display region to be dynamically operated and cyclic information for dynamic display. In this example, the display area and an interval for dynamic display of the promotion information may be set freely.

In another general aspect, the display driving apparatus may include a dynamic setting register 545, a sequence generator 410, a mode setter 430, and a dynamic driving controller 420. In one embodiment, the display driving apparatus is embodied as a specialized semiconductor chip in a single-package. The semiconductor chip includes a sequence generator, a memory, a microprocessor, and an input/output interface circuit. In the embodiment, the dynamic driving controller 420 and the mode setter 430 may be implemented as software only. In another embodiment, the dynamic driving controller 420 and the mode setter 430 may be embodied as specialized logic circuits instead of microprocessors.

In the illustrated example, the configuration register 545 is embodied as a flash memory. In the event that the display is a segment type display, the promotion setting information stored in the dynamic setting register 545 may include selection information for a segment that displays the promotion information and information about a cycle for which said promotion information is displayed.

The sequence generator 410 generates system sequences to wake up the dynamic setting register 545 that is used to drive dynamic segments. In one example, the sequence generator 410 may be a timer. In another example, the sequence generator 410 may be a plurality of timers. The timer may include a register to set a cycle, and may output a pulse at each cycle.

The mode setter 430 stores the promotion setting information received from the device controller 470 in the dynamic setting register 545, and programs the sequence generator 410 according to the promotion setting information.

The dynamic driving controller 420 is periodically activated according to the sequence generated by the sequence generator 410 to drive the display to display the promotion information in accordance with the promotion setting information stored in the dynamic setting register 545, and then enters into sleep mode. Once a timer event occurs in the sequence generator 410, a hardware interrupt takes place in the microprocessor, and then the displaying of the promotion information by the dynamic driving controller 420 is initiated. When the displaying of the promotion information is completed, the microprocessor returns to sleep mode.

A sequence cycle of the sequence generator 410 corresponds to a cycle for displaying the promotion information. For example, the sequence cycle of the sequence generator 410 corresponds to a blinking cycle, i.e., a time period from the moment the light turns on in the display, turns off and then to the moment of the light turns back on. In another example, in the example of alternately displaying pieces of promotion information that blinks, the sequence cycle of the sequence generator 410 may be one cycle for which each piece of promotion information is displayed. That is, each time a sequence is generated, the dynamic driving controller 420 wakes up, wherein the dynamic driving controller 420 may control to display the first promotion information during a first wakeup period and display the second promotion information during a second wakeup period. Furthermore, the pieces of promotion information may be sequentially or randomly, and repeatedly, displayed.

In one general aspect, the promotion setting information includes information about selection of a dynamic display region, and the dynamic driving controller 420 drives the display to display the promotion information on a region selected in accordance with the selection information. In the illustrative embodiment, the display driving apparatus is a driver chip of a segment-type EPD. In this case, the selection information for the dynamic display region may be, for example, a segment number. In the illustrated example, the display driving apparatus may operate 100 segments among which segments 1 to 90 are general driving segments and segments 91 to 100 are dynamic driving segments. Since the segments of the segment display may vary in number and shape, an ample number of output pins are provided with the display driving apparatus, thereby making it possible to drive various segment-type EPDs with different specifications.

According to one example, the display includes only one dynamic driving segment that blinks to display promotion information. That segment is connected to output pin 91 of the display driving apparatus. In this case, the selection information for a dynamic display region is the number of said segment, i.e., the number 91.

In another example, the promotion setting information may contain duration information indicating a period of time for which information is continuously displayed. For example, in the above example, a time period for which segment "91" remains turned on may be set by the duration information. The duration information must be shorter than a sequence cycle generated by the sequence generator. In the case of absence of the duration information, the dynamic driving controller 420 may display the promotion information for a period of time internally specified as a default setting, and then switch to the next mode to perform a designated operation, such as, terminating displaying the information. In the case in which the duration information has not been set, it may be internally set to an appropriate pre-determined value.

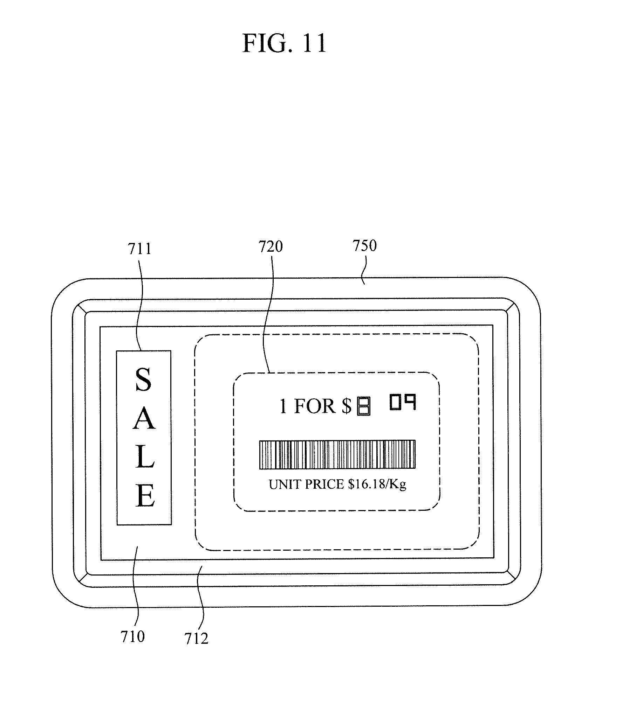

According to another example, the promotion setting information includes first promotion information and second promotion information, and the dynamic driving controller may alternately display the first promotion information and the second promotion information. For example, FIG. 11 illustrates an example of a display that includes two dynamic driving segments: one segment 711 that displays characters "sale," and the other segment 712 that encircles the bezel edge 750. The dynamic driving segments 711 and 712 are located in a first display regions 710 and correspond to segment output 91 and 92, respectively. In this example, the first promotion information may be segment number "91," and the second promotion information may be segment number "92." In this example, alternate display of information is repeatedly performed, whereby characters of "sale" first appears and disappear and then the bezel edge segment 712 is turned on and off. The display also includes a plurality of general driving segments that display product information within a second display region 720. Various modifications to the shape and arrangements of segments and display regions would be apparent to those skilled in the art, and such modifications are within the scope of the present disclosure.

In another example, the display driving apparatus may further include a dynamic driver 550 that is controlled by the power supply 510 and the dynamic driving controller 420, and the dynamic driver 550 drives dynamic segments of the display using the driving power supplied from the power supply 510.

The power supply 510 includes a charge pump and a DC-DC converter. The charge pump generates a high voltage required to drive the EPD. The DC-DC converter generates output power sources with several voltage levels that are needed to drive the EPD from the power source generated by the charge pump.

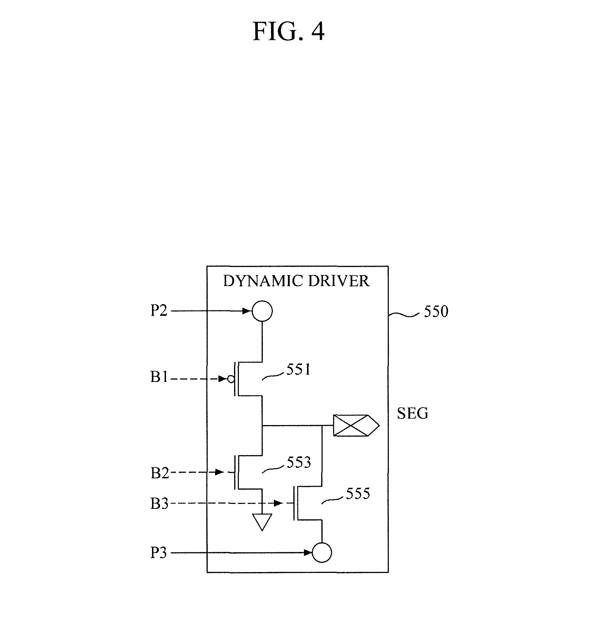

FIG. 4 illustrates an example of a dynamic driver 550. In this example, a driver chip of a segment-type EPD is embedded in the dynamic driver 550 for segment driving. However, in another example, such drivers may be provided as a separate external chip of a driver chip, i.e., the display driving apparatus. In this case, a chip onto which a plurality of drivers are integrated is connected to the output ports of the display driving apparatus.

Referring to the example illustrated in FIG. 4, the dynamic driver 550 includes a first switch 551 and a second switch 553, and the first and second switches 551 and 553 are connected in serial such that a connection node thereof is connected to one dynamic segment. The power output from the power supply 510 is applied as a source voltage to the first switch 551 of the dynamic driver 550 through a terminal P2. A source of the second switch 553 is grounded. By opening either of the first and second switches 551 and 553 while closing the other, a grounding voltage or a 9-volt voltage may be applied to the corresponding segment. Accordingly, a common transparent segment at the front is driven to a white color when a 9-volt voltage is applied thereto, or is driven to a black color when a grounding voltage is applied thereto.

In another example, the dynamic driver 550 may further include a fifth switch 555 connected to the connection node of the first and second switches 551 and 553. Negative power from the power supply 510 is provided to a source P3 of the fifth switch 555.

In the event that, while the common transparent segment at the front is fixed by grounding, -9 volt voltage is applied to the source of the third switch 555 is applied, the common segment may display a white color. That is, through the bipolar driving, it is possible to change or clear a display state of a particular segment without changing the previous display of all segments.

In the event that, while the common transparent segment is fixed by grounding, a +4 volt voltage is applied to the source of the fifth switch 555, the common segment may display a red color. Some EPDs display a white or black color when a +9 volt voltage is applied thereto, and display a red color when a +4 volt voltage is applied thereto. That is, although such EPDs are unipolar, it is possible to display a color by applying a voltage lower than a white or black driving voltage.

By providing one additional switch 555, it is possible to vary the range of voltage to be applied to the segment, thereby achieving the variation in controls and changes in display color.

In yet another example, the display driving apparatus may further include a general driving controller 450 that drives the display to display generic information according to setting information received from the mode setter 430, and then enters into sleep mode. The general driving controller 450 controls the display of information on a region of the display on which to display static information. When the device controller wakes up from sleep mode in response to an internal timer and receives the product information from the gateway, the device controller stores the received information in the internal memory, and at the same time controls the driving controller 450 and the general setting register 543 to update the product information on a general display region of the display.

According to one example, the general driving controller 450 includes functional blocks that activate or deactivate operations in response to an input from the interface 530. In this case, the general driving controller 450 updates the displayed information according to an external enable signal and the setting information. In another example, the general driving controller 450 includes an internal sequence generator, receives the general setting information from the interface 530, stores the information in the general setting register 543, enables the sequence generator in response to an instruction signal from the interface 530, and updates the display on the display according to the drive setting information in response to the sequential sequence signals from the sequence generator.

In this example, the general driving controller 450 may be embodied as software running on a processor, like the dynamic driving controller 420 and the mode setter 430. In another example, the general driving controller 450, as well as the dynamic driving controller 420 and the mode setter 430, may be embodied as a specialized logic circuit.

In yet another example, the display driving apparatus may further include a general driver 570 that is under control of the general driving controller 450 and drives the general segment of the display using a driving power provided from the power supply 510.

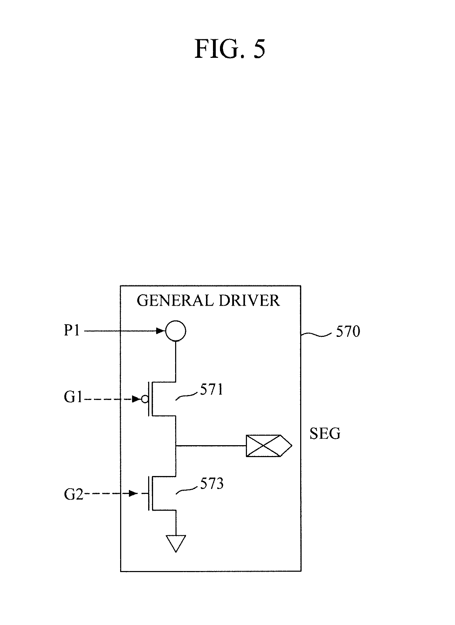

FIG. 5 illustrates an example of a general driver

Referring to the example illustrated in FIG. 5, the general driver 570 includes a fourth switch 571 and a fifth switch 573 that are connected in serial such that a connection node thereof is connected to one dynamic segment. A power output from the power supply 510 is applied as a source voltage to the fourth switch 571 of the dynamic driver 550 through a terminal P1. A source of the fifth switch 573 is grounded. By opening either of the fourth and fifth switches 571 and 573 while closing the other, a grounding voltage or a 9-volt voltage is applied to the corresponding segment. Accordingly, a common transparent segment at the front is driven to a white color in response to a 9-volt voltage being applied thereto, or is driven to a black color in response to a grounding voltage being applied thereto.

According to one example, the common transparent electrode segments of the general driver 570 and the dynamic driver 550 may be simultaneously driven as a group, or may be individually provided and driven independently of each other.

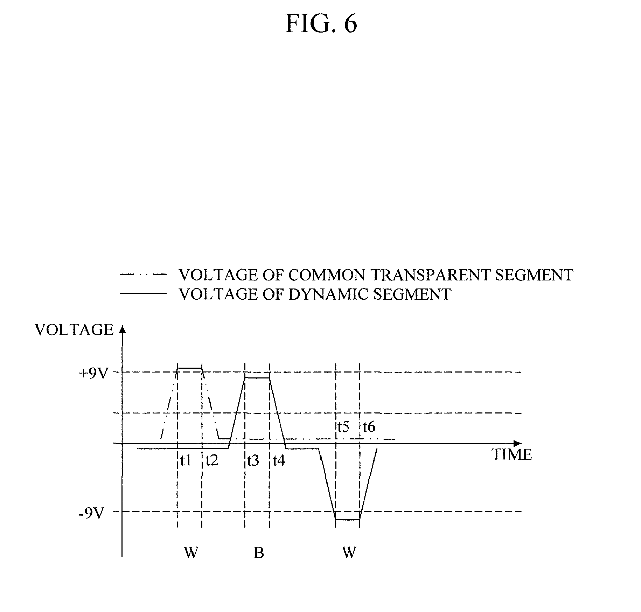

FIG. 6 is a graph illustrating examples of driving signals for a general segment and a dynamic segment according to the present disclosure. The dynamic segment may display promotional information on an EPD, while the general segment may display general product information. During a time interval between t1 and t2, a common transparent segment in the front of the display screen surface is driven to +9V while the dynamic segment is driven to 0 V, so that a corresponding segment of the EPD displays a white color. The white color is displayed until t3. During a time interval between t3 and t4, the common transparent segment in the front is driven to 0 V and the dynamic segment is driven to +9V, so that a corresponding segment of the EPD displays a black color. The black color is displayed until t5.

During a time interval between t5 and t6, the common transparent segment on the surface is driven to +9V and the dynamic segment is driven at 0 V, so that a corresponding segment of the EPD displays a white color.

In an example in which the general display region and a promotion information display region share the common transparent segment, the bipolar driving may enable only the promotion information display region to blink without intervening with the display of information on the general display region. That is, while the common transparent segment is maintained at 0 V, the general segment may be driven to either 0 V or +9V according to the display information. In this state, if -9V is applied to the dynamic segments on the promotion information display region, the display of the promotion information will be turned off. If +9V is applied to the promotion information display region in this state, said display region will display a black color. Thus, it is possible to produce a blinking state without disturbing the display of the general information.

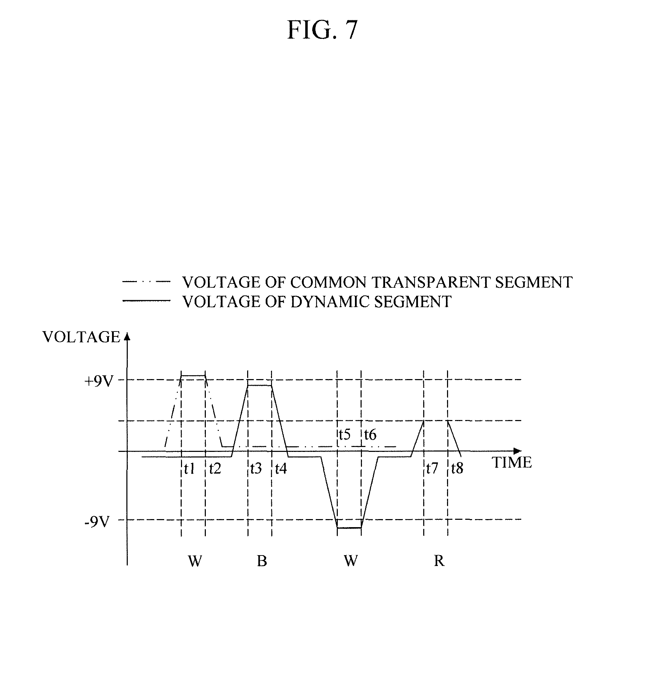

FIG. 7 is a graph showing driving signals of a general segment and a dynamic segment according to another example of the present disclosure. The difference between FIG. 7 and FIG. 6 is that a voltage output from the power supply to the fifth switch 555 of FIG. 4. During a time interval between t1 and t2, the common transparent segment on the surface is driven to +9V and the dynamic segment is driven to 0 V, so that a corresponding segment of the EPD displays a white color. The white color is maintained until t3. During a time interval between t3 and t4, the common transparent segment on the surface is driven to 0 V and the dynamic segment is driven to +9V, so that a corresponding segment of the EPD displays a black color. The black color is maintained until t5.

During a time interval between t5 and t6, the driving voltage of the common transparent segment on the surface is maintained at 0 V and the dynamic segment is driven at - 9V, so that the corresponding segment of the EPD displays a white color. The white color is displayed until t7.

During a time interval between t7 and t8, the driving voltage of the common transparent segment on the surface is maintained at 0 V and the dynamic segment is driven at +4 V, so that the corresponding segment of the EPD displays a red color.

In the event that the general display region and a promotion information display region share the common transparent segment, the multi-voltage driving enables only the promotion information display region to blink with a red color without disturbing the display of information on the general display region. That is, when the common transparent segment is maintained at 0 V, the general segment may be driven to either 0 V or +9V according to the display information. If-9V is applied to the dynamic segments on the promotion information display region during this state, the display of the promotion information will be turned off. If +9V is applied to the promotion information display region during this state, said display region will display a red color. Thus, it is possible to produce color-blinking without disturbing the display of general information.

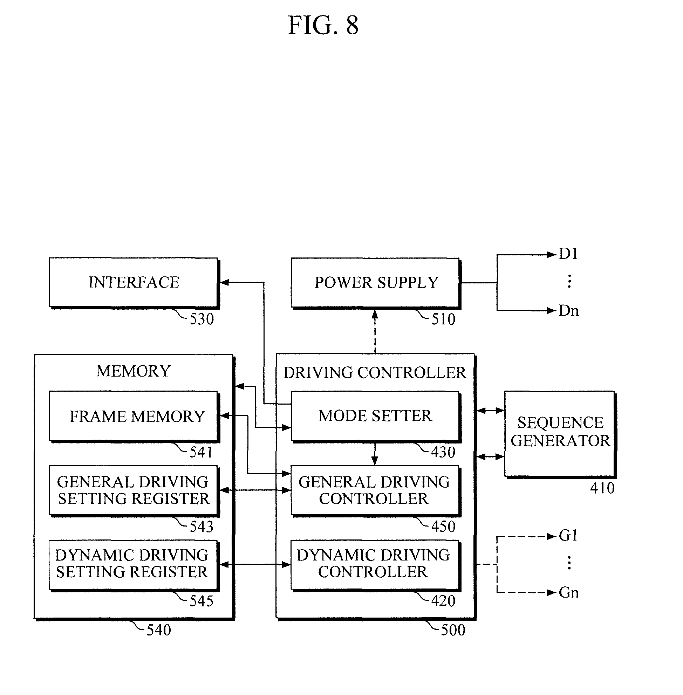

FIG. 8 illustrates another example of a display driving apparatus. The illustrative example relates to a display driving apparatus that drives a graph-type EPD. A mode setter 430 stores a display image received from a device controller in a frame memory 541, and stores received general setting information in a general setting register 543. The frame memory 541 may be implemented to be physically the same memory as the setting memories 543 and 545, or may be implemented as a separate memory. Then, the mode setter 430 receives additional promotion setting information from the device controller, and stores the received information in a dynamic setting register 545.

The promotion setting information stored in the dynamic setting register 545 may include image information displayed as promotion information, information about a region on which said image information is displayed, and information about a duration for which the image information is displayed. The duration information may be omitted, and in this case, an internally determined duration may be used. In another example, the promotion setting information stored in the dynamic setting register 545 may include pieces of image information to be sequentially or randomly, and repeatedly displayed as the promotion information, information about a region on which the image information is displayed, and information about a cycle for which each image information is alternately displayed. In this case, first promotion information and second promotion information may be alternately displayed on the same display region. In the above described embodiments, the cyclic information may be omitted and the information may blink or be alternately displayed at a rate determined by a program. In the case where the cyclic information is omitted, an internally determined cycle may be used.

A particular region of a TFT array in a graphic-type EPD may be designated as the promotion information display region. In another example, the promotion information display region may be a particular region of the graphic-type EPD on which data lines and gate lines are separately wired.

Referring back to FIG. 4, which illustrates the configuration of the dynamic driver 550, a driver chip of a segment-type EPD may include the dynamic driver for segment driving. However, such drivers may be provided as a separate external chip of a driver chip, i.e., the display driving apparatus. In this case, a chip onto which a plurality of drivers are integrated is connected to the output ports of the display driving apparatus. The configuration illustrated in FIG. 8 is similar to the configuration of FIG. 3, other than some changes made to be applied to the graphic-type EPD, and thus detailed description thereof will be omitted.

In another general aspect, the display driving apparatus further includes a power supply 510 to provide a driving power. The power supply 510 may vary in output voltage or current according to the specifications of the EPD, but is still similar to the power supply of FIG. 3. Generally, the graphic type display driving apparatus does not have an internal driving chip, but driving circuits are mounted on an EPD panel. In the case of a TFT EPD, a bipolar pulse is required for driving gate, so a data electrode is driven with a bipolar pulse. The display driving apparatus includes data electrode driving output terminals D1 to Dn and gate electrode driving output terminals G1 to Gn. In the case of the graphic-type EPD, the display driving apparatus periodically wakes up by the sequence generator and drives relevant data electrodes and gate electrodes such that the display image only on the promotion information display region blinks.

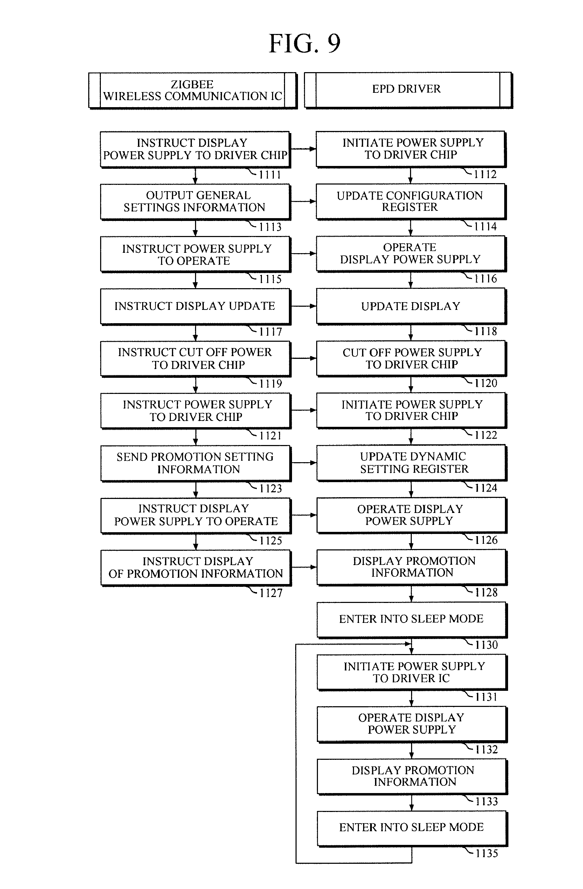

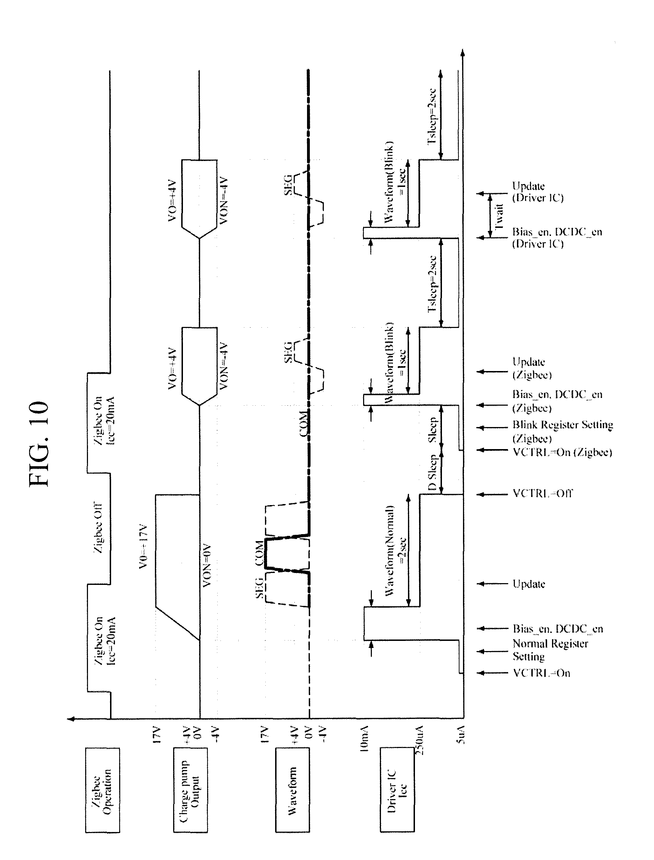

FIG. 9 is a flowchart illustrating an example of a method for controlling an EPD. FIG. 10 is a graph showing control signals for driving the EPD and waveforms of the control signals. In the example shown in FIG. 9, the EPD is a segment type display. However, the aspects of the present disclosure are not limited thereto. For example, in another method, the EPD may be graphic display.

In FIG. 10, the top waveform represents operation mode of a device controller embodied as a ZigBee wireless communication IC. The second top waveform is a charge pump output waveform from a display driver chip, and the second bottom waveform represents an output driving signal from a display driver chip, and the bottom waveform depicts a consumed current that has been supplied to a charge pump.

As shown in drawings, the ZigBee wireless communication IC periodically switches between sleep mode and wakeup mode according to an internal timer. During the wakeup mode, the ZigBee wireless communication IC updates the display of product information according to general display information. After entering into wakeup mode, the ZigBee wireless communication IC turns on a VCTRL signal to instruct the initiation of supply of power to the display driver chip in 1111. The display driver chip operates in response to an output signal from the ZigBee wireless communication IC in 1112. Then, general setting information to determine operation mode for general operations of the display driver chip is output in 1113. The display driver chip operates in response to an output signal from the ZigBee wireless communication IC, and writes and stores some of the received general setting information in an internal memory in 1114. For example, the display driver chip may store display data to be displayed on the EPD and parameter values with respect to setting states of a power source or switches inside the display driver chip. Once a configuration register has been written, the charge pump of the display driver chip starts charging.

Thereafter, the ZigBee wireless communication ICCC activates Bias_en terminal of the display driver chip. By doing so, a bias is provided to the internal circuit of the display driver chip, thereby enabling each block. Then, the wireless communication IC activates a DC-DC_en terminal of the display driver chip to instruct power supply to the display in 1115. Accordingly, the DC-DC converter circuit of the display driver chip initiates, and a voltage required for driving the EPD is produced from a current generated by the charge pump in 1116. As shown in the second top graph of FIG. 10, while a charge pump output rapidly increases to 17 V, the display driver chip consumes a current of 10 mA as shown in the bottom graph. Once the charge pump is fully charged and the output voltage thereof remains at 17 V, the current consumed by the display driver chip decreases to around 250 uA.

After the driving power is stabilized, the wireless communication IC activates an update terminal of the display driver chip to instruct the display update in 1117, and accordingly, the display driver chip provides a driving waveform to the segment to display the information as shown in the second bottom waveform and provides the driving waveform to the common terminal that is a background to update the information displayed on the display in 1118. The segments of the entire display region are first driven to a white color to clear the previous display data, then the common terminal are driven and the segments are driven at a driving voltage caused by the display data. Such static display driving generally lasts for 2 seconds. The voltage and duration for the segment display is controlled by setting values written in the configuration register. Thereafter, when the VCTRL signal is off in 1119, the power supply to the driver chip is cut off and the driver chip enters into sleep mode in 1120. Meanwhile, the wireless communication IC drives the display driver chip and then enters into sleep mode. Even after the wireless communication IC enters into sleep mode, the display driver chip remains activated, and after completing the display update, enters into sleep mode.

Thereafter, in the second wakeup, the ZigBee wireless communication IC sets the display driver chip to promotion mode, and initiates the display of promotion information. The illustrative embodiment relates to color blinking. After waking up, the ZigBee wireless communication IC turns on a VCTRL signal to instruct the initiation of power supply to the display driver chip in 1121. The display driver chip operates in response to an output signal from the ZigBee wireless communication IC in 1122. The dynamic setting information of the display driver chip is output in 1123. The display driver chip writes promotion setting information in the internal dynamic setting register when receiving the promotion setting information from the ZigBee wireless communication IC, and programs the internal sequence generator in 1124. For example, the promotion setting information may include a blinking cycle value, selection information for selecting a segment dynamically driven, and parameter values, such as a driving current value of the charge pump and duration of the driving current. Timing control values, such as the blinking cycle value and the duration of the driving current, may be programed by the internal sequence generator, and the selection information for the segment dynamically driven or the driving current of the charge pump may be stored in the dynamic setting register.

Once the information or parameter values are written in the dynamic setting register, the charge pump of the display driver chip starts charging. Then, the ZigBee wireless communication IC activates a Bias_en terminal of the display driver chip. By doing so, a bias is provided to the internal circuit of the display driver chip, thereby enabling each block. Then, the wireless communication IC activates a DC-DC_en terminal of the display driver chip to instruct power supply to the display in 1125. Accordingly, the DC-DC converter circuit of the display driver chip initiates, and a voltage required for driving the EPD is produced from a current generated by the charge pump in 1116. As shown in the second top graph of FIG. 10, while a charge pump output rapidly increases to 4 V, the display driver chip consumes a current of 10 mA as shown in the bottom graph. Once the charge pump is fully charged and the output voltage thereof remains at 17 V, the current consumed by the display driver chip decreases to around 250 uA. Unlike the first driving, in the second driving, the output of the charge pump is limited to 4 V, and the EPD may be driven to a red color.

After the driving power is stabilized, the wireless communication IC activates the update terminal of the display driver chip to instruct display of promotion information in 1127, and accordingly, the display driver chip provides a driving waveform to the segment to display the information as shown in the second bottom waveform and provides the driving waveform to the common terminal that is a background to update the display in 1128. The segments of the entire display region are first driven to a white color, and then the segments are driven at a driving voltage caused by the display data. The promotion information momentarily disappears and then appears for about 1 second within one cycle. The voltage and duration for the segment display is controlled by setting values written in the dynamic setting register. Then, the driver chip enters into sleep mode according to the control of autonomous generated sequences in 1130. Meanwhile, the wireless communication IC operates the display driver chip and then enters into sleep mode.

Then, the display driver chip remains in sleep mode for 2 seconds. Thereafter, independently of the ZigBee wireless communication IC, the display driver chip wakes up the internal microprocessor in response to a sequence generated by the internal sequence generator, and the microprocessor activates a Bias_en terminal. By doing so, a bias is provided to the internal circuit of the display driver chip, thereby enabling each block. Then, the internal microprocessor activates a DC-DC_en terminal, thereby enabling a current produced from the charge pump to be provided to the EPD in 1132. As shown in the second top graph of FIG. 10, while a charge pump output rapidly increases to 4 V, the display driver chip consumes a current of 10 mA as shown in the bottom graph. Once the charge pump is fully charged and the output voltage thereof remains at 4 V, the current consumed by the display driver chip decreases to around 250 uA. The output of the charge pump is limited to 4 V, so that the promotion information display region of the EPD may blink with a red color.

After the driving power is stabilized, the internal microprocessor activates the update terminal to display the promotion information. The display driver chip provides a driving waveform to the segment to display the information as shown in the second bottom waveform, and provides the driving waveform to the common terminal that is a background to display the promotion information in 1133. The segments of the entire display region are first driven to a white color, and then the segments are driven at a driving voltage caused by the display data. The promotion information momentarily disappears and then appears for about 1 second within one cycle. The voltage and duration for the segment display is controlled by setting values written in the dynamic setting register. Then, the driver chip enters into sleep mode according to the control of autonomous generated sequences in 1134.

In the illustrative embodiments, it is described that the ZigBee wireless communication IC wakes up twice respectively for updating general setting information for general driving and for updating the promotion setting information. However, the aspects of the present disclosure are not limited thereto, such that the update information that is received by the ZigBee wireless communication IC that first wakes up may include both general setting information and promotion setting information.

According to the embodiments as described above, a display of an electronic device operates a promotion feature at a low power. Only a particular portion of the display of the electronic device is driven and thus consumes a reduced power. Even when a main IC that controls the system enters into sleep mode, the promotion feature can be maintained by a display driver chip that independently operates and consumes a small amount of power.

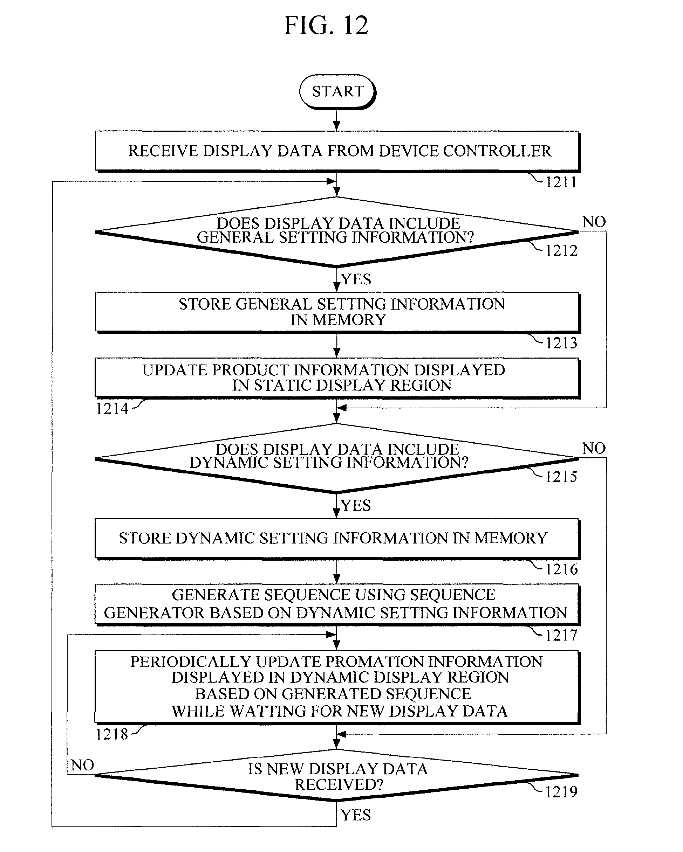

FIG. 12 is a flowchart illustrating another example of a method for displaying information on a display of an electronic device. The examples of electronic devices described in reference to FIGS. 1-11 applies to the illustrated example; thus, repetitive description thereof is omitted.

The display driver of the electronic display includes a general driving controller for driving a general display region of the display to display product information, and a dynamic driving controller for driving a dynamic display region of the display to display promotion information.

In 1211, the display driver receives display data from a device controller. The display data may include general setting information relating to product information or dynamic setting information relating to promotion information, or both the general setting information and the dynamic setting information.

In the event that it is determined in 1212 that the display data includes general setting information, the display driver stores the general setting information in a memory in 1213. The product information displayed in the general display region of the display is updated by the general driving controller based on the stored general setting information in 1214. The general driving controller may be deactivated and enter into sleep mode after the updating, saving power consumption. The general driving controller may remain deactivated until the product information is to be updated based on the receipt of new general setting information.

In the event that it is determined in 1215 that the display data includes dynamic setting information, the dynamic setting information regarding how promotion information is to be displayed is stored in a memory in 1216.

A sequence generator generates a system sequence based on the dynamic setting information in 1217.

In 1218, the dynamic driving controller periodically or cyclically updates promotion information displayed in the dynamic display region based on the generated sequence while the display driver waits for new display data. Thus, it is possible to drive only a portion of the display while conserving power consumption. During this time, the device controller and the general driving controller may go into sleep mode and wake up as necessary.

In 1219, when new display data is received from the device controller, the display driver updates information displayed in the display based on processes described in 1212 to 1219.

The example illustrated in FIG. 12 is provided to further illustrate a possible sequence of a method of driving a display, and the present disclosure is not limited thereto. Further, various additional components and processes performed by the electronic device would have been obvious to those skilled in the art, and such modifications are within the scope of the present disclosure.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

The apparatuses, units, modules, devices, and other components illustrated in FIGS. 1-8 that perform the operations described herein with respect to FIGS. 9, 10 and 12 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 9 and 12. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 9, 10 and 12 are performed partially by a processor, a controller or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A display driving apparatus for updating information displayed on a display of an electronic device, the display driving apparatus comprising:
a driving controller configured to receive promotion setting information from a device controller of the electronic device and drive the display according to the received promotion setting information independently of the device controller.

2. The display driving apparatus of claim 1, wherein the display is an electronic paper display.

3. The display driving apparatus of claim 1, further comprising:
a configuration register;
a sequence generator; and
a mode setter configured to store the received promotion setting information in the configuration register and to set the sequence generator,
wherein the driving controller comprises a dynamic driving controller configured to be periodically activated based on a sequence generated by the sequence generator, update the display to display the promotion information according to the promotion setting information stored in the configuration register and enter into sleep mode.

4. The display driving apparatus of claim 3, wherein the promotion setting information comprises selection information for a dynamic display region, and the dynamic driving controller is configured to control the promotion information to be displayed on a region selected according to the selection information.

5. The display driving apparatus of claim 3, wherein the promotion setting information comprises first promotion information and second promotion information, and the dynamic driving controller alternately displays the first promotion information and the second promotion information.

6. The display driving apparatus of claim 3, further comprising:
a power supply configured to provide a driving power; and
a dynamic driver configured to be controlled by the dynamic driving controller and to drive a dynamic segment of the display using the driving power provided by the power supply.

7. The display driving apparatus of claim 6, wherein the display driving apparatus comprises a plurality of dynamic segments and a plurality of dynamic drivers, and each dynamic driving controller controls a dynamic driver to perform blinking operation in response to the dynamic driver corresponding to a segment designated by the configuration register.

8. The display driving apparatus of claim 6, wherein the dynamic driver comprises a first switch and a second switch that are connected in serial such that a connection node thereof is connected to one dynamic segment.

9. The display driving apparatus of claim 8, wherein the dynamic driver further comprises a third switch connected to the connection node of the first and second switches.

10. The display driving apparatus of claim 9, wherein the power supply applies a first voltage to a source of the first switch and applies a second voltage with a different polarity than the first voltage to a source of the fifth switch.

11. The display driving apparatus of claim 9, wherein the power supply applies a first voltage to a source of the first switch and applies a second voltage that is lower than the first voltage to a source of the fifth switch.

12. The display driving apparatus of claim 6, wherein the driving controller further comprises a general driving controller configured to drive the display to display general information according to setting information received from the mode setter and then enter into sleep mode.

13. The display driving apparatus of claim 12, further comprising:
a general driver configured to be controlled by the general driving controller and drive a general segment of the display using a driving power provided from the power supply.

14. The display driving apparatus of claim 13, wherein the general driver comprises a fourth switch and a fifth switch that are connected in serial such that a connection node thereof is connected to one general segment.
